# EUROPEAN PATENT SPECIFICATION

(11) **EP 2 154 048 B1**
(45) Date of publication and mention of the grant of the patent: **23.02.2011**
(21) Application number: 09167454.9
(22) Date of filing: 07.08.2009
(51) Int. Cl.: B62D 1/184

(54) **Vehicle steering column**
Kraftfahrzeuglenksäule
Colonne de direction de véhicule

(30) Priority: 08.08.2008 JP 2008205460
(43) Date of publication of application: 17.02.2010
(73) Proprietor: JTEKT CORPORATION, Chuo-ku Osaka-shi Osaka 542-8502 (JP)
(72) Inventor: Yoshioka, Koji, Osaka-shi, Osaka 542-8502 (JP); Takeshima, Hirotaka, Kosai-shi, Shizuoka 431-0431 (JP)
(74) Representative: TBK-Patent

(56) References cited:
- US-A- 5 409 261

## Description

### Technical field of the Invention

The invention relates to a vehicle steering column provided with a tilt mechanism.

### Description of Related Art

Vehicle steering columns provided with a tilt mechanism are typically such that, after releasing a locking mechanism that holds the steering column at a tilted position by operating a tilt lever, a column tube inserted with a steering shaft is adjusted to a desired angle position by tilting about a tilting fulcrum shaft, and the locking mechanism is then locked by operating the tilt lever while in that position. An example of this type of conventional vehicle steering column is described in Japanese Patent Application Publication No. 2000344115 (JP-A-2000-344115).

In a vehicle steering column like that described in JP-A-2000-344115, since the locking mechanism also provides a tilt positioning function, when the locking mechanism is released, the steering column drops to the lowest position within the range over which it can be tilted due to its own weight. In addition, in the case of being provided with a spring that causes the steering column to spring upward, releasing the locking mechanism causes the steering column to be forcibly returned to its home position by the spring. Consequently, there is the problem of being unable to hold the steering column at the position at which the locking mechanism has been released. Furthermore, a vehicle steering column according to the preamble of claim 1 is known from US 5, 409, 261.

### STATEMENT OF INVENTION

An object of the invention is to provide a vehicle steering column capable of holding a steering column in position even after a locking mechanism has been released.

The vehicle steering column in one aspect of the invention includes: a column tube (11) capable of pivoting about a tilting fulcrum shaft (12); an upper bracket (22) that clamps a distance bracket (21) fixed to the column tube (11) so that the distance bracket (21) is movably adjusted with respect to the upper bracket (22) in an up-down direction; a tilt lever shaft (25) that passes through the distance bracket (21); and a tilt lever (31) which is rotatably attached to the tilt lever shaft (25), and the tilt lever (31) locking and releasing the distance bracket (21) to and from the upper bracket (22). A plurality of grooves (30a) that removably engage with the tilt lever shaft (25) are provided in the upper bracket (22), a link member (27) is pivotally supported by the column tube (11) or a member integrated with the column tube (11), and the tilt lever shaft (25) is attached to the link member (27) to be removably engaged with the grooves (30a) of the upper bracket (22) by pivoting of the link member (27).

According to the vehicle steering column in this aspect, a plurality of grooves removably engaging with a tilt lever shaft are provided in an upper bracket, a link member is pivotally supported by a column tube or a member integrated with the column tube, and a tilt lever shaft is attached to the link member to be removably engaged with the grooves of the upper bracket by pivoting of the link member. As a result, even if a lock of the distance bracket is released, the steering wheel and steering column do not move downward due to the weight thereof because of engagement between the tilt lever shaft and the grooves, thereby making it possible to reliably hold the steering wheel and the steering column at a tilting angle position prior to releasing the lock. In addition, since the tilt lever shaft engages with the grooves while locked, the tilt position is held even during secondary collisions, thereby improving the impact absorption performance of an air bag and the like.

In addition, in the vehicle steering column in the above aspect, the grooves (30a) of the upper bracket (22) may be formed in a serrated shape.

According to the vehicle steering column in the above aspect, since the grooves of the upper bracket are formed in a serrated shape, the tilt lever shaft is able to smoothly engage with the grooves regardless of the position of the steering wheel in the up-down direction.

In addition, in the vehicle steering column in the above aspect, an urging member (35) that urges the link member (27) so that the tilt lever shaft (25) engages with the grooves (30a), may also be included.

According to the vehicle steering column as claimed in the above aspect, sine an urging member is included that urges the link member so that the tilt lever shaft engages with the grooves, the tilt lever shaft can be made to reliably and easily engage with the grooves by the urging force of the urging member.

In addition, in the vehicle steering column in the above aspect, a slot (26) in which the tilt lever shaft (25) is disposed may be provided in the distance bracket (21), and a range of pivoting of the link member (27) may be limited by the slot (26).

According to the vehicle steering column in the above aspect, since a slot in which the tilt lever shaft is disposed is provided in the distance bracket, and a range of pivoting of the link member is limited by the slot, an amount of pivoting of the link member as determined by operation of the tilt lever can be limited within the minimum required range in which the tilt lever shaft disengages from the grooves.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a schematic diagram showing a vehicle steering column in an embodiment of the invention;
FIG. 2 is a side view showing the principal portion of a vehicle steering column;
FIG. 3 is a cross-sectional view taken along line III-III of FIG. 2;
FIG. 4 is a side view of an upper bracket; and
FIG. 5 is a drawing showing an operating state of FIG. 2.

### DETAILED DESCRIPTION OF EMBODIMENTS

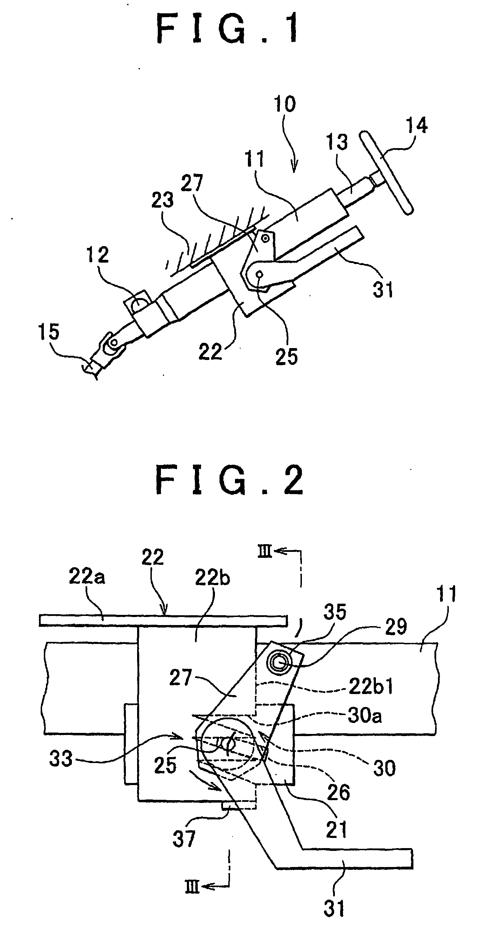

The following provides an explanation of embodiments of the invention based on the drawings. FIG. 1 shows a schematic diagram of a vehicle steering column 10 in this embodiment. A column tube 11 is pivotally supported by a tilting fulcrum shaft 12 and can be adjusted by pivoting about the tilting fulcrum shaft 12. A steering shaft 13 is rotatably fit into a shaft center portion of the column tube 11. A steering wheel 14 is attached to one end of the steering shaft 13. A shaft coupling in the form of an intermediate shaft 15 is coupled to the other end of the steering shaft 13.

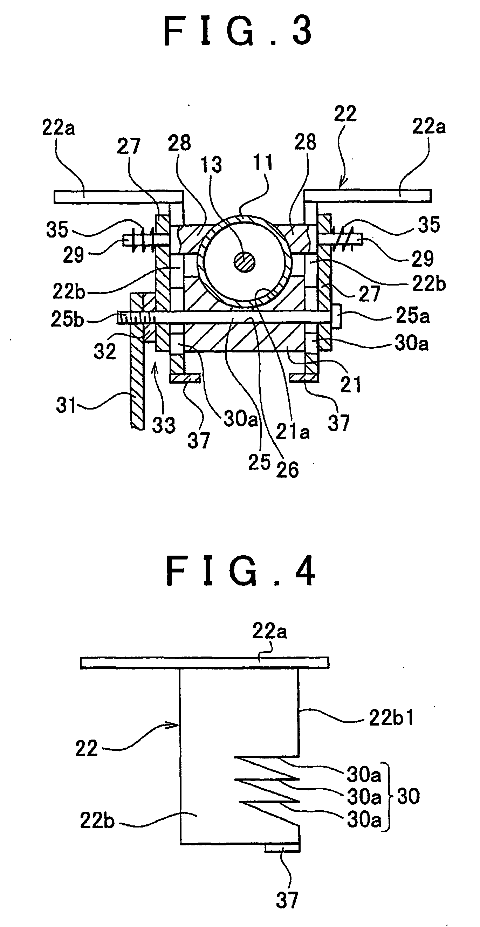

As shown in FIGS. 2 and 3, a distance bracket 21 is fastened to the column tube 11. The distance bracket 21 is clamped to an upper bracket 22 fixed to a vehicle body 23 (see FIG. 1) while being allowing to move by adjustment in the up-down direction. The upper bracket 22 has a pair of members having an L-shaped cross-section, including of a flange portion 22a extending along the column tube 11 and a sidewall portion 22b extending downward vertically from one end of the flange portion 22a, arranged back-to-back in bilateral symmetry, and each flange portion 22a is fixed to the vehicle body 23 with bolts and the like. An arcuate portion 21a is formed in a central portion of the distance bracket 21, and the outer peripheral surface of the column tube 11 is contacted by this arcuate portion 21a and is fixed by welding and the like. The distance bracket 21 is arranged between both sidewall portions 22b of the upper bracket 22, and is clamped to both sidewall portions 22b while allowed to make sliding contact therewith.

A slot 26 having a configuration to be described later is formed in the distance bracket 21 and through which is inserted a tilt lever shaft 25 in the horizontal direction at a right angle to the axial line of the steering shaft 13. The tilt lever shaft 25 is supported by a link member 27 that is pivotally supported by the column tube 11 while allowing to pivot about an axial line parallel to the tilt lever shaft 25. More specifically, a pair of support brackets 28 are respectively fixed to the circumferential surface of the column tube 11 at a slight distance away from one end 22b1 of the sidewall portion 22b of the upper bracket 22 towards the steering wheel 14, and pivot shafts 29 are respectively provided in these support brackets 28 parallel to the tilt lever bracket 25. The link member 27 able to make sliding contact with each outer surface of both sidewall portions 22b of the upper bracket 22 is supported by each pivot shaft 29 while respectively able to pivot about an axial line parallel to the tilt lever shaft 25. The tilt lever shaft 25 is inserted through the distal end of the link member 27 parallel to the pivot shafts 29, and the tilt lever shaft 25 protrudes from both sides of each link member 27 after passing through the upper bracket 22 and the distance bracket 21.

As shown in FIG. 4, an engaging portion 30, consisting of a plurality of grooves 30a cut out into a serrated shape that open towards the one end 22b1 on the side of the steering wheel 14, is formed in both sidewall portions 22b of the upper bracket 22, and the tilt lever shaft 25 is removably engaged with these grooves 30a by tilting of the link member 27. In order to removably engage the tilt lever shaft 25 with the engaging portion 30 by tilting the link member 27, the grooves 30a of the engaging portion 30 formed in both sidewall portions 22b of the upper bracket 22 are formed into a V-shape along an arcuate locus centered about the pivot shafts 29. In addition, the slot 26 formed in the distance bracket 21 is formed in an arc centering about the pivot shafts 29 or in a straight line approximating this arc. The amount of movement of the tilt lever shaft 25, or in other words, the amount of tilting of the link member 27, is restricted by this slot 26, and pivoting of the link member 27 is restricted at the position where the tilt lever shaft 25 has disengaged from the engaging portion 30.

The tilt lever shaft 25 protrudes from the link member 27 on both sides after passing through the slot 26 formed in the distance bracket 21 and the grooves 30a formed in both sidewall portions 22b of the upper bracket 22. A flange-shaped head portion 25a that contacts an end surface of one link member 27 is formed on one of the protruding ends of the tilt lever shaft 25, while a threaded portion 25b is formed on the other protruding end. A nut 32 integrally provided on the tilt lever 31 is screwed onto the threaded portion 25b. The tilt lever shaft 25 is prevented from turning by engaging with the serrations in the link members 27 on both sides.

As a result, when the tilt lever 31 is operated by tilting in one direction centering about the tilt lever shaft 25 such as in the clockwise direction in FIG 2, both sidewall portions 22b of the upper bracket 22 are tightened by threading interaction between the threaded portion 25b of the tilt lever shaft 25 and the nut 32 of the tilt lever 31, and the distance bracket 21 clamped between both sidewall portions 22b is locked in position. In addition, when the tilt lever 31 is operated by tilting in the other direction centering about the tilt lever shaft 25 such as in the counter-clockwise direction of FIG. 2, tightening of the upper bracket 22 to both sidewall portions 22b is released, the locked state of the distance bracket 21 is released, and the angle of the column tube 11 can be adjusted. A locking mechanism 33 that locks and unlocks the distance bracket 21 to and from the upper bracket 22 is composed by the threaded portion 25b of the tilt lever shaft 25 and the nut 32 of the tilt lever 31.

An urging member in the form of a torque spring 35 is attached to the pivot shaft 29, and one end of this torque spring 35 is fastened to the pivot shaft 29, while the other end is fastened to the link member 27. The torque spring 35 constantly imparts an urging force to the link member 27 in the direction in which the tilt lever shaft 25 engages with the engaging portion 30 of the upper bracket 22, or in other words, urging force in the clockwise direction of FIG. 2.

Furthermore, in FIGS. 2, 3 and 4, a limiting portion 37 respectively provided on both sidewall portions 22b of the upper bracket 22 defines a lower limit of a range of movement of the distance bracket 21 and limits the amount by which the distance bracket 21 moves downward by contacting the lower surface thereof when the distance bracket 21 has been lowered by a prescribed amount together with the column tube 11.

Next, an explanation is provided of operation of this embodiment configured in the manner described above, Normally, the tilt lever shaft 25 is engaged with a certain groove 30a of the upper bracket 22 as shown in FIG. 2 by urging force of she torque spring 35 that acts on the link member 27. In addition, the distance bracket 21 and the upper bracket 22 are locked by the locking mechanism 33, and the steering wheel 14 and the column tube 11 are held at a prescribed tilting angle position.

In the case of adjusting the position of the steering wheel 14 to a desired position in the up-down direction from this state, when the tilt lever 31 is first operated by tilting about the tilt lever shaft 25 such as in the counter-clockwise direction in FIG. 2, tightening of both sidewalls 22b of the upper bracket 22 is released by threading interaction between the nut 32 of the tilt lever 31 and the threaded portion 25b of the tilt lever shaft 25, thereby unlocking the distance bracket 21. At this time, even if the hand is taken away from the tilt lever 31, since the tilt lever shaft 25 is engaged with the grooves 30a of the upper bracket 22, the steering wheel 14 and the column tube 11 do not move downward due to the weight thereof, and the steering wheel 14 and the column tube 11 can be reliably held at the tilting angle position prior to unlocking the distance bracket 21.

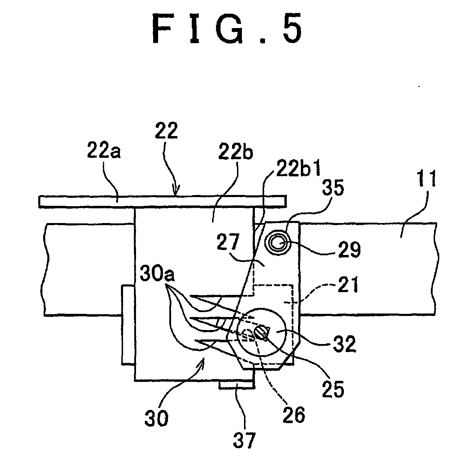

When the tilt lever 31 is then operated by pulling in the direction in which the tilt lever shaft 25 disengages from the engaging portion 30 of the upper bracket 22 (direction indicated by the arrow in FIG 2) in opposition to the urging force of the torque spring 35 while in this state, the link member 27 is tilted about the center of the pivot shafts 29 in the clockwise direction of FIG 2. As a result, the tilt lever shaft 25 moves along the slot 26 of the distance bracket 21, and as shown in FIG. 5, is disengaged from the grooves 30a of the upper bracket 22. In this case, by moving the tilt lever shaft 25 to the position where it contacts the end portion of the slot 26 of the distance bracket 21 (state shown in FIG 5), the tilt lever shaft 25 can be disengaged from the grooves 30a of the upper bracket 22 without having to operate the tilt lever 31 beyond that which is necessary.

While in this state, after the steering wheel 14 is moved by an amount desired to be adjusted either in the upward or downward direction in which tilt is desired to be adjusted, when the pulling operating force applied to the tilt lever 31 is removed, the link member 27 is pivoted in the clockwise direction of FIG 5 centering about the pivot shafts 29 by the urging force of the coil spring 35, thereby enabling the tilt lever shaft 25 is be reliably and easily engaged with a different groove 30a of the engaging portion 30 of the upper bracket 22. As a result, the column tube 11 can be held at a prescribed tilting angle position. At this time, since the engaging portion 30 of the upper bracket 22 is formed in a serrated shape, the tilt lever shaft 25 can be smoothly engaged with the engaging portion 30 (grooves 30a) regardless of the position of the steering wheel 14 in the up-down direction.

Subsequently, by operating the tilt lever 31 by tilting in the opposition direction of that indicated above (for example, the clockwise direction of FIG 2) centering about the tilt lever shaft 25, both sidewall portions 22b of the upper bracket 22 are tightened by the threading interaction between the nut 32 of the tilt lever 31 and the threaded portion 25b of the tilt lever shaft 25. As a result, the distance bracket 21 is locked to the upper bracket 22 in a state in which the column tube 11 is held at a prescribed tilting angle position.

Furthermore, in the case a hand is mistakenly released from the steering wheel 14, the tilt lever 31 and the like while the tilt lever shaft 25 is disengaged from the engaging portion 30 of the upper bracket 22, although there is the possibility of the column tube 11 moving downward due to its own weight, the amount of downward movement of the column tube 11 is limited as a result of the distance bracket 21 contacting the limiting portion 37 provided on the upper bracket 22.

According to this embodiment as described above, the engaging portion 30, composed of a plurality of grooves 30a that removably engage with the tilt lever shaft 25, is provided on the upper bracket 22, the link member 27 is rotatably supported by the column tube 11, and the tilt lever shaft 25 is attached to the link member 27 so as to engage with and disengage from the engaging portion 30 of the upper bracket 22 by pivoting of the link member 27. As a result, the steering wheel 14 and the column tube 11 do not move downward by their own weight due to engagement of the tilt lever shaft 25 and the engaging portion 30 even if the locked state of the distance bracket 21 is released, and the steering wheel 14 and the column tube 11 can be reliably held at a tilting angle position prior to releasing the lock. In addition, since the tilt lever shaft 25 engages with the grooves 30a while in the locked state, the tilt position is held even during secondary collisions, thereby improving the impact absorption performance of an air bag and the like.

Moreover, since the engaging portion 30 of the upper bracket 22 is composed by the grooves 30a formed into a serrated shape, the tilt lever bracket 25 is able to smoothly engage with the grooves 30a regardless of the position of the steering wheel 14 in the up-down direction.

Although the embodiment described above describes an example in which the engaging portion 30 composed of a plurality of serrated grooves 30a is formed in the upper bracket 22, the shape of the engaging portion 30 may of any shape provided it is able to removably engage the tilt lever shaft 25, and the engaged state with the tilt lever shaft 25 can be maintained even if tightening of the distance bracket 21 to the upper bracket 22 is released.

In addition, although the tilt lever shaft 25 is restricted from rotating relative to the link member 27 in the embodiment described above, it can also be restricted from rotating relative to the distance bracket 21 or the upper bracket 22, and is not limited to that described in the above-mentioned embodiment.

In addition, although the embodiment described above describes an example in which locking and unlocking of the distance bracket 21 to and from the upper bracket 22 is carried out by a screw mechanism composed of the threaded portion 25b and the nut 32, this can also be carried out with a cam mechanism instead of the screw mechanism.

Moreover, although the embodiment described above describes an example in which the link member 27, which supports the tilt lever shaft 25 that engages with and disengages from the engaging portion 30 provided on the upper bracket 22, is tiltably supported by the column tube 11, the link member 27 can also be supported by a member integrated with the column tube 11 instead of by the column tube 11, and for example, may be supported by the distance bracket 21.

Although the above has provided an explanation of embodiments of the invention, the invention is not limited to the above-mentioned embodiments, but rather can naturally be modified in various ways within a range that does not deviate from the gist thereof.

## Claims

1. A vehicle steering column comprising:
a column tube (11) capable of pivoting about a tilting fulcrum shaft (12);
an upper bracket (22) that clamps a distance bracket (21) fixed to the column tube (11) so that the distance bracket (21) is movably adjusted with respect to the upper bracket (22) in an up-down direction;
a tilt lever shaft (25) that passes through the distance bracket (21); and
a tilt lever (31) which is rotatably attached to the tilt lever shaft (25), and the tilt lever (31) locking and releasing the distance bracket (21) to and from the upper bracket (22), wherein
a link member (27) is pivotally supported by the column tube (11) or a member integrated with the column tube (11), **characterized in that**
a plurality of grooves (30a) that removably engage with the tilt lever shaft (25) are provided in the upper bracket (22), and
the tilt lever shaft (25) is attached to the link member (27) to be removably engaged with the grooves (30a) of the upper bracket (22) by pivoting of the link member (27) .

2. The vehicle steering column according to claim 1, wherein
the grooves (30a) of the upper bracket (22) are formed in a serrated shape.

3. The vehicle steering column according to claim 1 or 2, further comprising
an urging member (35) that urges the link member (27) so that the tilt lever shaft (25) engages with the grooves (30a).

4. The vehicle steering column according to any one of claims 1 to 3, wherein
a slot (26), in which the tilt lever shaft (25) is disposed, is provided in the distance bracket (21), and a range of pivoting of the link member (27) is limited by the slot (26).

5. The vehicle steering column according to any one of claims 1 to 4, further comprising
a limiting portion (37) that defines a lower limit of a range of movement of the distance bracket (21).

## Patentansprüche

1. Fahrzeuglenksäule, die Folgendes aufweist:
eine Säulenröhre (11), die in der Lage ist, um eine Neigungsdrehpunktwelle (12) zu schwenken;
einen oberen Halter (22), der einen Abstandshalter (21) einklemmt, der an der Säulenröhre (11) befestigt ist, so dass der Abstandshalter (21) mit Hinblick auf den oberen Halter (22) in einer Aufwärts-Abwärts-Richtung bewegbar eingestellt ist;
eine Neigungshebelwelle (25), die durch den Abstandshalter (21) hindurchführt; und
einen Neigungshebel (31), der drehbar an der Neigungshebelwelle (25) befestigt ist, und wobei der Neigungshebel (31) den Abstandshalter (21) an dem oberen Halter (22) sperrt und von diesem löst, wobei
ein Verbindungsbauteil (27) durch die Säulenröhre (11) oder ein Bauteil, das in die Säulenröhre (11) integriert ist, schwenkbar gestützt ist,
**dadurch gekennzeichnet, dass**
eine Vielzahl von Nuten (30a), die mit der Neigungshebelwelle (25) entfernbar in Eingriff stehen, in dem oberen Halter (22) vorgesehen sind, und
die Neigungshebelwelle (25) an dem Verbindungsbauteil (27) befestigt ist, um durch ein Schwenken des Verbindungsbauteils (27) entfernbar mit den Nuten (30a) des oberen Halters (22) in Eingriff zu sein.

2. Fahrzeuglenksäule nach Anspruch 1, wobei die Nuten (30a) des oberen Halters (22) in einer gezahnten Form ausgebildet sind.

3. Fahrzeuglenksäule nach Anspruch 1 oder 2, ferner mit
einem Drängbauteil (25), das das Verbindungsbauteil (27) derart drängt, dass die Neigungshebelwelle (25) mit den Nuten (30a) in Eingriff steht.

4. Fahrzeuglenksäule nach einem der Ansprüche 1 bis 3, wobei
ein Schlitz (26), in dem die Neigungshebelwelle (25) angeordnet ist, in dem Abstandshalter (21) vorgesehen ist und ein Schwenkbereich des Verbindungsbauteils (27) durch den Schlitz (26) begrenzt ist.

5. Fahrzeuglenksäule nach einem der Ansprüche 1 bis 4, ferner mit
einem Begrenzungsabschnitt (27), der eine untere Grenze eines Bewegungsbereichs des Abstandshalters (21) festlegt.

## Revendications

1. Colonne de direction de véhicule comportant :
un tube de colonne (11) capable de pivoter autour d'un arbre de point de pivotement d'inclinaison (12) ;
un support supérieur (22) qui serre un support de distance (21) fixé sur le tube de colonne (11) de telle sorte que le support de distance (21) est ajusté de façon mobile par rapport au support supérieur (22) dans une direction de haut en bas ;
un arbre de levier d'inclinaison (25) qui passe à travers le support de distance (21) ; et
un levier d'inclinaison (31) qui est fixé de façon rotative sur l'arbre de levier d'inclinaison (25), et le levier d'inclinaison (31) bloquant et libérant le support de distance (21) sur et du support supérieur (22),
un élément de liaison (27) étant supporté de façon pivotante par le tube de colonne (11) ou un élément intégré au tube de colonne (11), **caractérisée en ce que**
une multiplicité de rainures (30a) qui engage de manière démontable l'arbre de levier d'inclinaison (25) est prévue dans le support supérieur (22), et
l'arbre de levier d'inclinaison (25) est fixé sur l'élément de liaison (27) afin d'être engagé de manière démontable avec les rainures (30a) du support supérieur (22) en faisant pivoter l'élément de liaison (27).

2. Colonne de direction de véhicule selon la revendication 1, dans laquelle les rainures (30a) du support supérieur (22) sont réalisées avec une forme dentelée.

3. Colonne de direction de véhicule selon la revendication 1 ou 2, comportant en outre un élément de poussée (35) qui pousse l'élément de liaison (27) de telle sorte que l'arbre de levier d'inclinaison (25) s'engage dans les rainures (30a).

4. Colonne de direction de véhicule selon l'une quelconque des revendications 1 à 3, dans laquelle une fente (26), dans laquelle l'arbre de levier d'inclinaison (25) est disposé, est prévue dans le support de distance (21), et une plage de pivotement de l'élément de liaison (27) est limitée par la fente (26).

5. Colonne de direction de véhicule selon l'une quelconque des revendications 1 à 4, comportant en outre une partie de limitation (37) qui définit une limite inférieure d'une plage de mouvement du support de distance (21).
